# FASCICULE DE BREVET EUROPEEN

(11) **EP 2 171 301 B1**
(45) Date de publication et mention de la délivrance du brevet: **20.02.2013**
(21) Numéro de dépôt: 08826909.7
(22) Date de dépôt: 29.07.2008
(51) Int. Cl.: F16D 21/06, F16D 13/58

(54) **AGENCEMENT POUR LA FIXATION D'UN DISPOSITIF MODULAIRE D'EMBRAYAGE SUR UN ARBRE MENE**
ANORDNUNG ZUR BEFESTIGUNG EINER MODULAREN KUPPLUNGSVORRICHTUNG AUF EINER ANGETRIEBENEN WELLE
ARRANGEMENT FOR ATTACHING A MODULAR CLUTCH DEVICE ON A DRIVEN SHAFT

(30) Priorité: 01.08.2007 FR 0756881
(43) Date de publication de la demande: 07.04.2010
(60) Demande divisionnaire: 12157838.9
(73) Titulaire: Valeo Embrayages, 80009 Amiens (FR)
(72) Inventeur: THOMIRE, Sylvain, F-80000 Amiens (FR); DUTIER, Ivan, F-80260 Rainneville (FR); MAINGAUD, Daniel, F-37420 SAVIGNY EN VERON (FR); LEBAS, Gilles, F-80800 Villers Bretonneux (FR); THIBAUT, François, F-80330 Longueau (FR)
(74) Mandataire: Jeuland, Mickaël
(86) Numéro de dépôt international: PCT/FR2008/051422
(87) Numéro de publication internationale: WO 2009/019402

(56) Documents cités:
- EP-A- 1 632 687
- DE-A1-102006 022 054

## Description

L'invention se rapporte à un agencement pour la fixation d'un dispositif modulaire d'embrayage sur un arbre mené.

L'invention se rapporte plus particulièrement à un agencement pour la fixation d'un dispositif modulaire d'embrayage à friction, notamment pour un véhicule automobile, sur un premier arbre mené, qui comporte :
- un plateau de réaction qui est monté à rotation autour du premier arbre mené par l'intermédiaire d'un palier de roulement, la bague intérieure du palier de roulement étant insérée par coulissement axial vers l'avant sur une portée d'extrémité arrière du premier arbre mené lors d'une opération de montage ;
- au moins un premier disque coaxial avant de friction qui est agencé axialement en avant du plateau de réaction et qui est destiné à être serré contre une face avant du plateau de réaction ;
- un élément de blocage qui, lors d'une opération de fixation, est agencé par déformation élastique dans une position de fixation dans une gorge de fixation associée de la portée du premier arbre mené de manière à limiter le déplacement axial vers l'arrière du palier de roulement.

Les dispositifs d'embrayage de ce type sont généralement conçus de manière à former un module qui est prêt à être monté sur l'arbre mené de transmission d'un véhicule automobile. Le dispositif d'embrayage repose plus particulièrement sur l'arbre mené par un palier de roulement dit de reprise d'effort. Lors du montage, la bague intérieure du palier de roulement est insérée axialement sur une portée associée de l'arbre mené.

Pour empêcher que la bague intérieure du palier de roulement de reprise d'effort ne se démonte en glissant sur la portée, le module est ensuite fixé sur l'arbre mené par un élément de blocage, généralement un anneau élastique, qui bloque les déplacements axiaux du palier de roulement de reprise d'effort vers l'extrémité libre de la portée.

Cependant, la mise en place de l'élément de blocage dans sa position de fixation est généralement peu aisée car l'encombrement du dispositif d'embrayage réduit l'accessibilité à la portée de l'arbre mené ainsi que la visibilité. Ainsi, l'opération de fixation du module de dispositif d'embrayage sur la portée de l'arbre mené est complexe.

Le document DE-A-10.2006.022.054 propose une solution pour résoudre ce problème en réalisant une première opération de prémontage du dispositif d'embrayage au cours de laquelle une première partie avant du dispositif d'embrayage comportant le palier de roulement est montée sur l'arbre mené de manière que la portée de l'arbre soit facilement accessible à un opérateur. Puis le palier de roulement est fixé au moyen d'un élément de blocage au cours d'une deuxième opération de fixation. Enfin, lors d'une troisième opération d'assemblage, une partie arrière du dispositif d'embrayage est assemblée à la première partie avant du dispositif d'embrayage de manière à reconstituer le module du dispositif d'embrayage. La portée de l'arbre mené est alors inaccessible.

Cette solution présente cependant l'inconvénient d'être complexe et onéreuse car il est nécessaire de démonter le module du dispositif d'embrayage en deux parties, puis d'assembler successivement les deux parties sur l'arbre mené.

De plus, les éléments de blocage sont susceptibles d'être égarés lors du transport du module de dispositif d'embrayage, ou ils doivent faire l'objet d'un transport séparé. Ainsi, l'opération de fixation du module de dispositif d'embrayage sur la portée de l'arbre mené est onéreuse.

Pour résoudre notamment ces problèmes, l'invention propose un agencement du type décrit précédemment, tel que, préalablement à l'opération de fixation, l'élément de blocage occupe une position d'attente dans laquelle il est porté par le dispositif d'embrayage,.
- l'élément de blocage est un anneau élastique radialement déformable qui est fixé sur le dispositif d'embrayage de manière à être dans sa position d'attente lorsque le dispositif d'embrayage est monté sur le premier arbre mené, l'opération de fixation succédant à l'opération de montage ;
- ledit agencement étant caractérisé en ce que l'anneau élastique est agencé dans un état expansé dans une gorge de stockage qui est réalisée dans une face cylindrique extérieure d'un élément de l'agencement qui s'étend axialement vers l'arrière depuis la face arrière du plateau de réaction, le bord d'extrémité arrière de ladite face cylindrique extérieure étant agencé au droit de la gorge de fixation de manière que l'anneau élastique soit guidé par ladite face cylindrique extérieure vers la gorge de fixation lorsque l'anneau élastique est déplacé axialement vers l'arrière ;

Selon d(autres caractéristiques de l'invention, l'agencement étant tel qu'il comporte des moyens pour guider les déplacements de l'anneau élastique depuis sa position d'attente jusqu'à sa position de fixation.

D'autres caractéristiques et avantages apparaîtront à la lecture de la description détaillée qui va suivre pour la compréhension de laquelle on se reportera aux dessins annexés parmi lesquels :
- la figure 1 est une vue en demi-coupe axiale d'un agencement pour la fixation d'un dispositif d'embrayage à friction sur un premier arbre mené réalisé selon un premier mode de réalisation n'illustrant pas l'invention;
- la figure 2 est une vue de face d'un détail de la figure 1 représentant un anneau élastique agencé dans une position d'attente sur le voile d'un disque de friction selon le premier mode de réalisation, ;
- la figure 3 est une vue en perspective qui représente l'anneau élastique de la figure 1 ;
- la figure 4 est une vue à plus grande échelle en demi-coupe axiale qui représente un agencement du dispositif d'embrayage sur la portée de l'arbre mené réalisé selon un deuxième mode de réalisation n'illustrant pas l'invention dans lequel l'anneau élastique en position d'attente est agencé dans une gorge de stockage d'un moyeu du disque de friction ;
- la figure 5 est une vue similaire à celle de la figure 4 dans laquelle l'anneau élastique est dans une position intermédiaire entre sa position d'attente et sa position de fixation ;
- la figure 6 est une vue similaire à celle de la figure 4 dans laquelle l'anneau élastique est dans sa position de fixation ;
- la figure 7 est une vue similaire à celle de la figure 4 qui représente un troisième mode de réalisation n'illustrant pas l'invention dans lequel l'anneau élastique en position d'attente est agencé sur le voile du disque de friction;
- la figure 8 est une vue similaire, à celle de la figure 4 qui représente un cinquième mode de réalisation n'illustrant pas l'invention dans lequel l'anneau élastique en position d'attente est agencé dans la bague intérieure du palier de roulement de reprise d'effort, la bague intérieure étant représentée avant le montage du dispositif d'embrayage sur la portée de l'arbre mené ;
- la figure 9 est une vue similaire à celle de la figure 8 dans laquelle la bague intérieure du palier de roulement est en cours de montage sur la portée de l'arbre mené ;
- la figure 10 est une vue similaire à celle de la figure 11 dans laquelle la bague intérieure du palier de roulement est en position montée sur la portée de l'arbre mené ;
- la figure 11 est une vue similaire à celle de la figure 10 dans laquelle le dispositif d'embrayage monté est en cours de fonctionnement ;
- la figure 12 est une vue de détail en demi-coupe axiale qui représente le palier de roulement en cours de montage équipé d'un élément de blocage réalisé selon un sixième mode de réalisation n'illustrant pas l'invention ;
- la figure 13 est une vue similaire à celle de la figure 12 qui représente le palier de roulement dans sa position montée et l'élément de blocage dans sa position de fixation.

Dans la description qui va suivre, des éléments identiques, analogues ou similaires seront désignés par des mêmes numéros de référence.

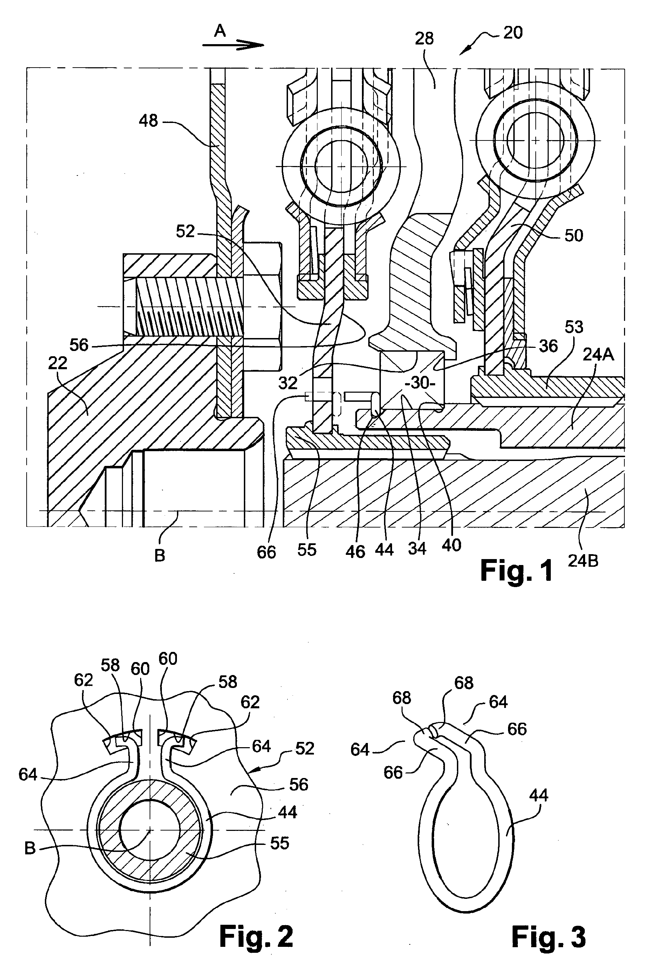

Dans la description qui va suivre, on adoptera à titre non limitatif une direction axiale, suivant l'axe de rotation "B" du dispositif d'embrayage 20, orientée d'arrière en avant comme représenté par la flèche "A" des dessins, ce qui correspond à une orientation de la gauche vers la droite en considérant la figure 1. Des éléments seront qualifiés d'intérieurs ou d'extérieurs en fonction de leur proximité radiale avec l'axe de rotation "B".

A la figure 1, on a représenté schématiquement une portion d'un dispositif d'embrayage 20 à friction, notamment pour véhicule automobile, qui est réalisé conformément aux enseignements de l'invention.

On a représenté ici les éléments appartenant à une moitié supérieure du dispositif d'embrayage 20 car l'embrayage a une forme de révolution autour de son axe de rotation "B".

On a représenté à la figure 1 un dispositif d'embrayage 20 qui est destiné à accoupler temporairement un arbre moteur 22 qui est agencé axialement vers l'arrière et dont une extrémité avant est représentée à gauche à la figure 1, avec au moins un arbre mené 24.

L'arbre moteur 22 est rotatif autour d'un axe de rotation "B" et il est entraîné en rotation par un moteur (non représenté) du véhicule automobile.

Le dispositif d'embrayage 20 représenté à la figure 1 est relié mécaniquement à deux arbres menés 24A, 24B concentriques qui sont montés rotatifs coaxialement à l'arbre moteur 22. Le premier arbre mené 24A forme un tube axial à l'intérieur duquel est agencé le deuxième arbre mené 24B. Une portion d'extrémité arrière libre du deuxième arbre mené 24B dépasse axialement par rapport à l'extrémité arrière du premier arbre mené tubulaire 24A. Chacun des arbres menés 24A, 24B est susceptible de tourner indépendamment de l'autre.

Les arbres menés 24A, 24B sont reliés à une boîte de vitesses (non représentée) agencée axialement en avant du dispositif d'embrayage 20.

Plus particulièrement; le premier arbre mené 24A correspond à certains rapports de vitesses de la boîte de vitesses, par exemple les rapports de vitesses impairs, tandis que le deuxième arbre mené 24B correspond aux autres rapports de vitesses, par exemple les rapports de vitesses pairs.

Le dispositif d'embrayage 20 comporte des premiers moyens d'accouplement temporaire du premier arbre mené 24A avec l'arbre moteur 22.

De manière connue, le dispositif d'embrayage 20 comporte un plateau radial circulaire de réaction 28 qui est monté à rotation autour de l'axe de rotation "B", par l'intermédiaire d'un palier de roulement 30, qui appartient au dispositif d'embrayage 20 selon l'invention. Dans les exemples représentés aux figures, le palier de roulement 30 est formé par un roulement à billes.

Le palier de roulement 30 est ici interposé radialement entre la face cylindrique intérieure 32 d'un orifice central du plateau de réaction 28 et une portée 34 formée par une face cylindrique extérieure d'un tronçon d'extrémité arrière du premier arbre mené tubulaire 24A. La portée d'extrémité arrière 34 comporte ainsi un bord d'extrémité arrière libre.

Une bague extérieure 38 du palier de roulement 30 est emmanchée à force dans la face cylindrique intérieure 32 de l'orifice central du plateau de réaction 28, tandis qu'une bague intérieure 42 du palier de roulement 30 est insérée par coulissement axial sur la portée d'extrémité arrière 34. Ainsi, le palier de roulement 30 appartient au dispositif modulaire d'embrayage 20.

L'opération de montage du dispositif d'embrayage 20 sur la portée 34 sera détaillée par la suite.

La face cylindrique intérieure 32 du plateau de réaction 28 est limitée vers l'avant par une face radiale d'épaulement 36 d'extrémité avant contre laquelle la bague extérieure 38 du palier de roulement 30 est destinée à être appuyée axialement vers l'avant.

La portée d'extrémité arrière 34 du premier arbre mené 24A est aussi limitée vers l'avant par une face radiale d'épaulement 40 d'extrémité avant. Un élément de blocage 44 est aussi agencé dans une position de fixation dans laquelle il est agencé dans une gorge annulaire de fixation 46 de la portée 34 du premier arbre mené 24A axialement en arrière du palier de roulement 30. Ainsi le déplacement axial du palier de roulement 30 vers l'arrière est limité par l'élément de blocage 44. Dans l'exemple représenté à la figure 1, l'élément de blocage 44 est plus particulièrement formé par un anneau élastique 44 du type jonc ou analogue.

Le plateau de réaction 28 est ainsi fixe axialement par rapport à la portée d'extrémité arrière 34 du premier arbre mené 24A.

Dans cette configuration, la bague intérieure 42 du palier de roulement 30 est solidaire en rotation du premier arbre mené 24A, tandis que la bague extérieure 38 du palier de roulement 30 est solidaire en rotation du plateau de réaction 28.

Par ailleurs, le plateau de réaction 28 est solidaire en rotation de l'arbre moteur 22. A cet effet, le dispositif d'embrayage 20 comporte un disque radial circulaire flexible 48 qui est agencé à une extrémité arrière du dispositif d'embrayage 20 et qui est fixé coaxialement à l'arbre moteur 22. Le disque flexible 48 est relié mécaniquement en rotation à une portion périphérique du plateau de réaction 28 par des moyens de liaison qui ne font pas l'objet de l'invention et qui ne seront donc ni représentés, ni décrits par la suite.

Le dispositif d'embrayage 20 comporte aussi un premier disque coaxial avant de friction 50 qui est agencé axialement en avant du plateau de réaction 28. Le premier disque de friction 50 comporte un voile radial à la périphérie duquel une garniture annulaire de friction (non représentée) est agencée axialement en vis-à-vis d'une face avant de frottement (non représentée) du plateau de réaction 28.

Le premier disque de friction 50 est destiné à être serré contre la face avant du plateau de réaction 28 par un premier plateau de pression (non représenté) pour accoupler temporairement le premier arbre mené 24A avec l'arbre moteur 22. A cet effet, le premier disque de friction 50 est monté solidaire en rotation du premier arbre mené 24A par l'intermédiaire d'un moyeu 53 qui est monté coulissant axialement sur le premier arbre mené 24A tubulaire entre une position arrière serrée contre la face avant du plateau de réaction 28 et une position avant libre dans laquelle le premier disque de friction 50 est éloigné de la face avant du plateau de réaction 28.

Le dispositif d'embrayage 20 comporte aussi des deuxièmes moyens d'accouplement temporaire du deuxième arbre mené 24B avec l'arbre moteur 22.

Les deuxièmes moyens d'accouplement comportent ainsi un deuxième disque coaxial arrière de friction 52 pour l'accouplage temporaire du deuxième arbre mené 24B avec l'arbre moteur 22. Les fonctions du deuxième disque de friction 52 sont analogues à celles du premier disque de friction 50.

Le deuxième disque coaxial arrière de friction 52 est agencé axialement en arrière du plateau de réaction 28. Le deuxième disque de friction 52 comporte ainsi un voile radial à la périphérie duquel une garniture annulaire de friction (non représentée) est agencée axialement en vis-à-vis d'une face arrière de frottement (non représentée) du plateau de réaction 28.

Le deuxième disque de friction 52 est destiné à être serré contre la face arrière du plateau de réaction 28 par un deuxième plateau de pression (non représenté) pour accoupler temporairement le deuxième arbre mené 24B avec l'arbre moteur 22. A cet effet, le deuxième disque de friction 52 est monté solidaire en rotation du deuxième arbre mené 24B par l'intermédiaire d'un moyeu 55 qui est monté coulissant axialement sur le tronçon d'extrémité arrière du deuxième arbre mené 24B tubulaire entre une position avant serrée contre la face arrière du plateau de réaction 28 et une position arrière libre dans laquelle le deuxième disque de friction 52 est éloigné de la face arrière du plateau de réaction 28.

Le voile du deuxième disque de friction 52 est plus particulièrement agencé axialement en vis-à-vis en arrière et à proximité du bord d'extrémité arrière libre de la portée 34 du premier arbre mené 24A.

Lorsque le premier disque de friction 50 est dans sa position arrière serrée, il exerce un effort axial de serrage vers l'arrière sur le plateau de réaction 28. Cet effort axial de serrage est transmis au palier de roulement 30. L'anneau élastique 44 de blocage permet de limiter le coulissement axial de la bague intérieure 42 du palier de roulement 30 vers l'arrière de manière que le palier de roulement 30 reste en position montée sur la portée d'extrémité arrière 34 du premier arbre mené 24A.

L'anneau élastique de blocage 44 est ainsi le seul élément de fixation du dispositif modulaire d'embrayage 20 sur le premier arbre mené 24A.

De manière connue, lors de l'opération de montage du dispositif d'embrayage 20 sur le premier arbre mené 24A, le module formé par le dispositif d'embrayage 20 est agencé de manière que la bague intérieure 42 du palier de roulement 30 soit coaxiale à l'axe de rotation "B" et en avant du bord d'extrémité arrière libre de la portée 34. Puis le dispositif d'embrayage 20 est déplacé axialement vers l'avant de manière que la bague intérieure 42 du palier de roulement 30 soit insérée sur la portée 34.

Ensuite, lors d'une opération de fixation, l'anneau élastique 44 de blocage est inséré par déformation élastique dans la gorge de fixation 46 associée de la portée 34 du premier arbre mené 24A de manière à occuper sa position de fixation, comme représenté en traits pleins à la figure 1.

L'invention propose un agencement pour simplifier la fixation du dispositif d'embrayage 20 sur le premier arbre mené 24A, tout en évitant de perdre l'anneau élastique 44 de blocage pendant le transport du dispositif d'embrayage 20 jusqu'à la chaîne de montage.

A cette fin, préalablement à l'opération de fixation, l'anneau élastique 44 de blocage occupe une position d'attente dans laquelle l'anneau élastique 44 est porté par le dispositif d'embrayage 20 et dans laquelle l'anneau élastique 44 est maintenu fixe par rapport au dispositif d'embrayage 20 au moins jusqu'à l'opération de fixation. Ansi, dans sa position d'attente, l'anneau élastique 44 est solidaire en déplacements du dispositif modulaire d'embrayage 20. En d'autres termes, dans sa position d'attente, l'anneau élastique 44 fait partie du dispositif modulaire d'embrayage 20. Ainsi l'anneau élastique 44 ne peut pas être perdu.

On a représenté aux figures 1 à 3 un premier mode de réalisation ne représentant pas l'invention.

L'élément de blocage est un anneau élastique 44 radialement déformable qui est fixé sur le dispositif d'embrayage 20 de manière à être dans sa position d'attente lorsque le dispositif d'embrayage 20 est monté sur le premier arbre mené 24A, c'est-à-dire lorsque le palier de roulement 30 est inséré sur la portée 34.

L'anneau élastique 44 est susceptible d'être :
- dans un état non contraint vers lequel il est rappelé élastiquement et dans lequel le diamètre intérieur de l'anneau élastique 44 est inférieur où égal au diamètre extérieur du fond de la gorge de fixation 46 ;
- dans un état expansé dans lequel il est déformé élastiquement radialement vers l'extérieur de manière que son diamètre intérieur soit supérieur à son diamètre dans l'état non contraint ;
- et dans un état rétracté dans lequel il est déformé élastiquement radialement vers l'intérieur de manière que son diamètre soit inférieur à son diamètre dans l'état non contraint.

Dans ce premier mode de réalisation, l'anneau élastique 44 est mobile entre sa position arrière d'attente dans laquelle il est agencé sur le deuxième disque de friction 55 coaxialement au premier arbre mené 24A, comme représenté en traits interrompus à la figure 1, et sa position de fixation, comme représenté en traits pleins à la figure 1.

L'anneau élastique 44 est plus particulièrement agencé contre une face avant 56 du voile radial du deuxième disque de friction 52.

A cet effet, comme représenté à la figure 2, le voile du deuxième disque de friction 52 est ajouré de deux orifices de fixation 58 de forme sensiblement rectangulaire qui sont agencés de manière excentrée par rapport à l'axe de rotation "B", au-dessus de l'axe de rotation "B" en se référant à la figure 2. Les deux orifices de fixation 58 sont agencés à proximité l'un de l'autre, de manière symétrique par rapport à une droite radiale.

Chaque orifice de fixation 58 est délimité circonférentiellement par un bord radial proximal 60 par rapport à l'autre orifice de fixation 58, et par un bord radial distal 62 par rapport à l'autre orifice de fixation 58.

L'anneau élastique 44 est ouvert dans sa partie supérieure en se référant aux figures 2 et 3. L'anneau élastique 44 comporte ainsi deux tronçons d'extrémités à proximités d'un de l'autre qui sont conformés en crochets 64 symétriques par rapport à un plan axial.

Chaque crochet 64 a plus particulièrement une forme de "L" dont une branche axiale 66 s'étend axialement vers l'arrière et dont l'autre branche circonférentielle 68 s'étend circonférentiellement en direction de l'autre crochet 64.

Lorsque l'anneau élastique 44 est dans sa position d'attente, la branche circonférentielle 68 de chaque crochet 64 est reçue dans un orifice de fixation 58 associé du voile du deuxième disque de friction 52. Pour ce faire, les crochets 64 sont écartés élastiquement l'un de l'autre par expansion radiale de l'anneau élastique 44.

Ainsi, la branche axiale 66 de chaque crochet 64 traverse le voile à travers l'orifice de fixation 58 associé et vient en appui contre le bord proximal 60 de l'orifice de fixation 58 lorsque l'anneau est rappelé élastiquement vers son état non contraint.

La branche circonférentielle 68 de chaque crochet 64 est alors agencée en arrière et en vis-à-vis de la face arrière du voile du deuxième disque de friction 52 de manière à limiter les déplacements de l'anneau élastique axialement vers l'avant.

Dans la position d'attente, les déplacements de l'anneau élastique 44 sont ainsi limités axialement dans les deux sens par les branches circonférentielles 68 des crochets 64, d'une part, et par le corps annulaire de l'anneau élastique 44, d'autre part. L'anneau élastique 44 est ainsi maintenu dans sa position d'attente.

Dans sa position d'attente, l'anneau élastique 44 entoure le moyeu 55 du deuxième disque de friction 52. Avantageusement, l'anneau élastique 44 est serré élastiquement autour du moyeu 55 de manière à l'immobiliser radialement dans toutes les directions.

Selon une variante non représentée, le voile du deuxième disque de friction comporte au moins un ergot qui s'étend en saillie axialement vers l'avant et contre lequel un tronçon de l'anneau élastique, par exemple opposé à l'ouverture, est destiné à être en appui radial vers l'intérieur lorsque l'anneau élastique est dans sa position d'attente de manière à immobiliser radialement l'anneau élastique dans toutes les direction.

Lors de l'opération de fixation du dispositif d'embrayage 20 succédant à l'opération de montage, le passage de la position d'attente vers la position de fixation de l'anneau élastique 44 est réalisé par un écartement circonférentiel des crochets 64 provoquant l'expansion élastique de l'anneau pour permettre le passage des branches circonférentielles 68 des crochets 64 à travers les orifices de fixation 64 associés, puis par coulissement axial vers l'avant en direction de la gorge de fixation 46 de la portée 34. L'anneau élastique 44 est maintenu dans son état expansé de manière à présenter un diamètre intérieur supérieur au diamètre extérieur de la portée 34 du premier arbre mené 24A jusqu'à ce que l'anneau élastique 44 soit engagé sur la portée 34.

L'interruption de l'écartement des crochets provoque le rappel élastique de l'anneau élastique vers son état non contraint de manière à ce qu'il enserre la portée 34. L'anneau est alors poussé axialement jusqu'à attendre la gorge de fixation 46 dans laquelle il pénètre en étant rappelé vers son état non contraint. L'anneau élastique 44 occupe alors sa position de fixation.

Le déplacement de l'anneau élastique 44 est ainsi guidé jusqu'à sa position de fixation par la portée 34.

Selon une variante non représentée de l'invention, la branche circonférentielle 68 de chaque crochet 64 s'étend depuis la branche axiale en s'éloignant de l'autre crochet 64. Ainsi, l'anneau élastique 44 est agencé dans sa position d'attente par rapprochement élastique des crochets 64 l'un de l'autre de manière à permettre le passage des branches circonférentielles 68 vers l'arrière à travers les orifices de fixation 58.

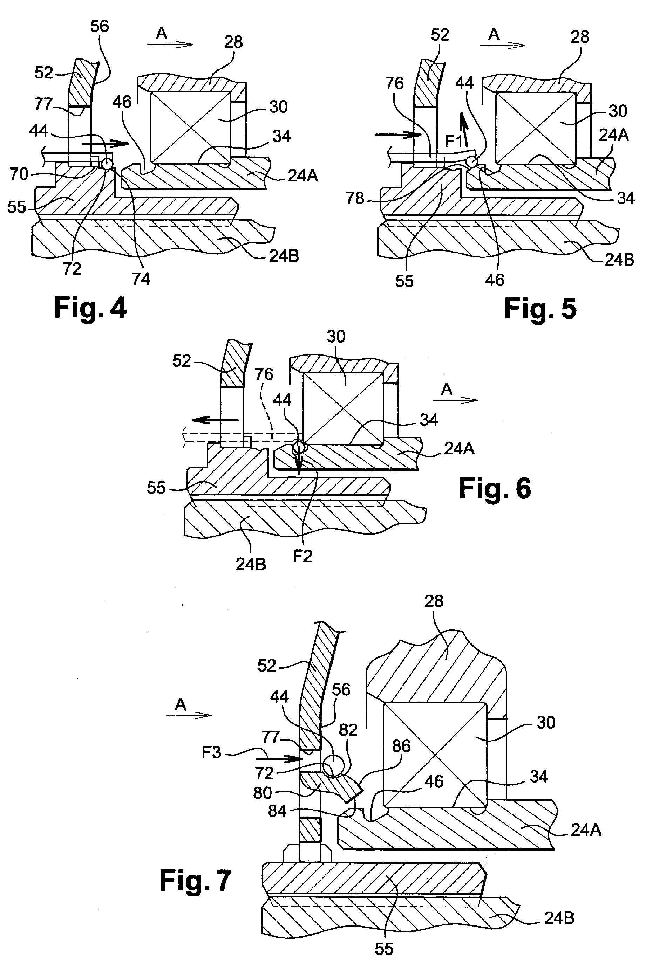

On a représenté aux figures 4 à 6 un deuxième mode de réalisation dans lequel l'élément de blocage 44 est un anneau élastique 44 simple, par exemple un jonc conventionnel ou analogue.

Comme représenté à la figure 4, le moyeu 55 du deuxième disque de friction 52 comporte un tronçon d'épaulement qui s'étend axialement vers l'avant depuis le voile et qui est délimité radialement vers l'extérieur par une face cylindrique centrale 70 de diamètre extérieur au moins égal au diamètre extérieur de la portée 34 du premier arbre mené 24A. Le bord d'extrémité avant de la face cylindrique centrale 70 du moyeu 55 est destiné à être agencée axialement en vis-à-vis et à proximité de l'extrémité arrière de la portée 34 du premier arbre mené 24A.

La face cylindrique centrale 70 du moyeu 55 comporte une gorge annulaire de stockage 72 qui est agencée axialement en avant du voile du deuxième disque de friction 52. La gorge de stockage 72 est destinée à recevoir l'anneau élastique 44 dans sa position d'attente.

Ainsi, comme illustré à la figure 4, dans sa position d'attente, l'anneau élastique 44 est serré élastiquement autour de la gorge de stockage 72 de manière à être immobilisé et maintenu dans sa position d'attente par rapport au dispositif d'embrayage 20.

La gorge de stockage 72 de faible profondeur est délimitée vers l'avant par une rampe 74 présentant une pente inclinée vers l'extérieur d'arrière en avant de manière qu'il soit possible de faire passer l'anneau élastique 44 vers son état expansé élastiquement en exerçant un effort axial de transfert vers l'avant, par exemple avec un outil concentrique 76, qui fasse glisser l'anneau élastique 44 vers l'avant.

Afin de faciliter l'accès de l'outil concentrique 76 jusqu'à l'anneau élastique 44, le voile du deuxième disque de friction 52 est ajouré d'au moins une fenêtre de passage 77 qui débouche axialement sur l'anneau élastique 44.

Avantageusement, le bord d'extrémité arrière de la portée 34 du premier arbre mené 24A comporte un chanfrein 78 de manière à faciliter le transfert de l'anneau élastique 44 depuis le moyeu 55 jusqu'à la portée 34.

Lors de l'opération de fixation, l'outil concentrique 76 est introduit axialement d'arrière en avant par la fenêtre de passage 77 de manière à solliciter l'anneau axialement vers l'avant. L'anneau élastique 44 est alors poussé vers l'avant sur la rampe 74 de manière à sortir de la gorge de stockage 72 dans son état expansé élastiquement.

Lorsque l'anneau élastique 44 atteint le bord d'extrémité avant de la face cylindrique centrale 70, comme illustré à la figure 5, l'anneau élastique 44 est poussé de manière à sauter sur le chanfrein 78 d'extrémité arrière de la portée 34 du premier arbre mené 24A.

L'outil concentrique 76 continue à pousser axialement vers l'avant l'anneau élastique 44 qui est guidé par le chanfrein 78 jusqu'à la portée 34. L'anneau élastique 44 est ainsi serré élastiquement autour de la portée 34 dans son état expansé comme représenté par la flèche "F1" de la figure 5.

Lorsque l'anneau élastique 44 atteint la gorge de fixation 46, il est rappelé élastiquement vers son état non contraint de manière à occuper sa position de fixation dans la gorge de fixation 46, comme représenté par la flèche "F2" à la figure 6. L'outil concentrique 76 est alors retiré axialement vers l'arrière.

Le déplacement de l'anneau élastique 44 depuis sa position d'attente jusqu'à sa position de fixation est ainsi guidé successivement par la rampe 74, par le chanfrein 78, puis par la portée 34.

Selon un troisième mode de réalisation qui est représenté à la figure 7, l'élément de blocage 44 est formé par un anneau élastique tel qu'un jonc conventionnel ou analogue, et il est agencé de manière analogue à celle du deuxième mode de réalisation.

Cependant, dans sa position d'attente, l'anneau élastique 44 est ici agencé contre la face avant 56 du voile du deuxième disque de friction 52.

A cet effet, le voile du deuxième disque de friction 52 comporte une pluralité d'ergots 80, par exemple cinq ergots, qui s'étendent axialement en saillie vers l'avant par rapport à la face avant 56 du voile. Chaque ergot 80 comporte une face d'appui 82 tournée vers l'extérieur par rapport à l'axe de rotation "B".

Les ergots sont agencés régulièrement en formant un cercle coaxial à l'axe de rotation "B" de manière que, dans sa position d'attente, l'anneau élastique 44 soit serré radialement simultanément sur les faces d'appui 82 des ergots 80 dans un état expansé élastiquement. Le cercle sur lequel sont disposés les faces d'appui 82 des ergots 80 présente un diamètre supérieur au diamètre de la portée 34 du premier arbre mené 24A.

Chaque ergot 80 comporte une extrémité avant libre 84 qui est agencé radialement au droit d'une face arrière de la gorge de fixation 46.

Un tronçon d'extrémité avant de la face d'appui 82 de chaque ergot 80 présente la forme d'une rampe 86 qui est inclinée radialement vers l'intérieur en direction de la gorge de fixation 46 de manière à guider le coulissement axial vers l'avant de l'anneau élastique 44 jusqu'au droit de la gorge de fixation 46.

Au moins un ergot comporte une gorge de stockage 72 destinée à immobiliser et à maintenir axialement l'anneau élastique 44 dans sa position d'attente tant qu'un effort axial de transfert orienté vers l'avant n'est pas appliqué à l'anneau élastique comme indiqué par la flèche "F3" de la figure 7.

Selon une variante non représentée de l'invention, la gorge de stockage 72 est formée par un tronçon d'extrémité arrière de la face d'appui d'au moins un ergot qui est incliné vers l'intérieur d'avant en arrière de manière que l'anneau élastique 44 rappelé élastiquement vers son état non contraint appuie radialement vers l'intérieur sur le tronçon arrière de l'ergot 80, ce qui provoque son glissement vers l'arrière jusqu'à être en appui contre la face avant 56 du voile du deuxième disque de friction 52.

Les ergots 80 sont par exemple réalisés par découpage puis pliage de languettes radiales réalisées dans le voile du deuxième disque de friction 52 comme illustré par la figure 7.

Lors de l'opération de fixation succédant à l'opération de montage du dispositif d'embrayage sur le premier arbre mené 24A, un effort axial de transfert "F3" vers l'avant est appliqué à l'anneau élastique 44, par exemple par un outil (non représenté) inséré axialement vers l'avant à travers une fenêtre 77 de passage, de manière que l'anneau élastique 44 coulisse axialement vers l'avant en direction de la rampe 86 d'extrémité avant de chaque ergot 80.

Sous l'effet du rappel élastique de l'anneau élastique 44 vers son état non contraint, l'anneau appui radialement vers l'intérieur sur les rampes 86, ce qui provoque son glissement vers l'avant jusqu'à la gorge de fixation 46 dans sa position de fixation.

Le déplacement de l'anneau élastique 44 depuis sa position d'attente jusqu'à sa position de fixation est ainsi guidé par la rampe 86.

Selon un quatrième mode de réalisation non représenté de l'invention, l'anneau élastique est agencé dans un état expansé dans une gorge de stockage qui est réalisée dans une face cylindrique d'un moyeu qui s'étend axialement vers l'arrière depuis la face arrière du plateau de réaction. Ainsi, dans sa position d'attente, l'anneau élastique est agencé axialement en avant et radialement vers l'extérieur par rapport à la gorge de fixation 46.

L'anneau élastique est ainsi serré élastiquement autour de la gorge de stockage de manière à être maintenu dans sa position d'attente.

Le bord d'extrémité arrière de la face cylindrique est agencé au droit de la gorge de fixation de manière que l'anneau élastique soit guidé jusqu'à la gorge de fixation par la face cylindrique vers la gorge de fixation lorsque l'anneau élastique est déplacé axialement vers l'arrière.

Dans ce quatrième mode de réalisation, le déplacement de l'anneau élastique 44 depuis sa position d'attente jusqu'à sa position de fixation est guidé par la face cylindrique extérieure du moyeu.

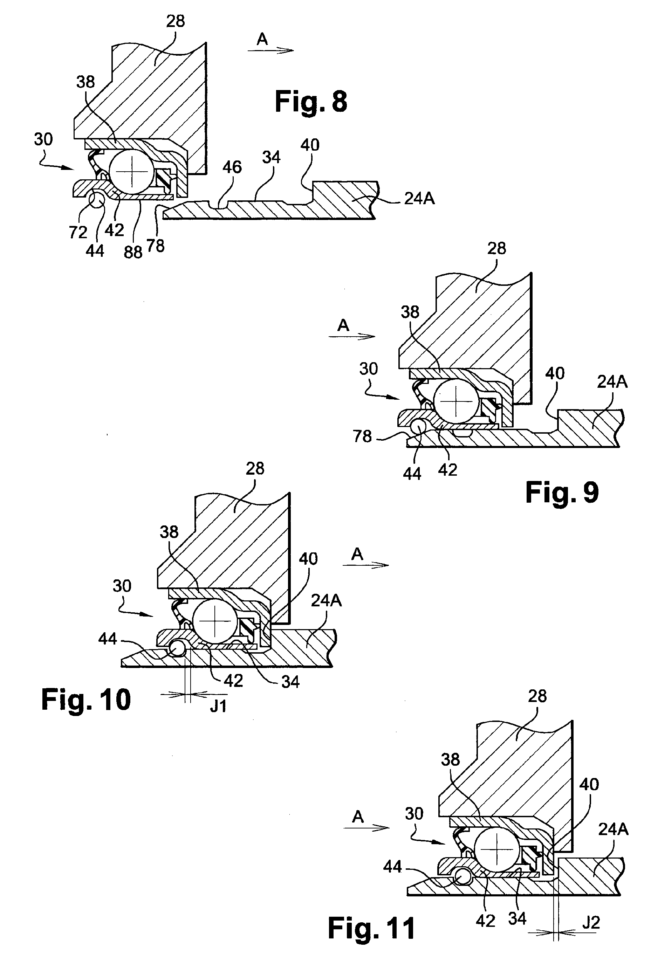

Selon un cinquième mode de réalisation qui est représenté aux figures 8 à 11, l'élément de blocage 44 est agencé de manière à permettre son passage automatique depuis sa position d'attente jusqu'à sa position de fixation lors de l'opération de montage par insertion du palier de roulement sur la portée 34 du premier arbre mené 24A. Ainsi, l'opération de fixation est réalisée automatiquement et simultanément lors de l'unique opération de montage.

Dans ce cinquième mode de réalisation, l'élément de blocage 44 est formé par un anneau élastique 44 radialement déformable tel qu'un jonc ou analogue.

L'anneau élastique 44 est agencé dans un état non contraint dans une gorge de stockage 72 formée dans une face cylindrique intérieure 88 de la bague intérieure 42 du palier de roulement 30 de manière qu'une portion annulaire interne de l'anneau élastique 44 soit en saillie radialement vers l'intérieur par rapport à la face intérieure 88 de la bague intérieure 42. L'anneau élastique 44 est par exemple agencé dans la gorge de stockage 72 de la bague intérieure 42 par déformation élastique.

Ainsi, l'anneau élastique 44 est porté par la bague intérieure 42 du palier de roulement 30. L'anneau élastique 72 est destiné à être emprisonné et maintenu dans sa position d'attente dans la gorge de stockage 72 durant toute l'opération de montage, et à demeurer prisonnier une fois le dispositif d'embrayage 20 monté sur la portée 34.

La gorge de stockage 72 est suffisamment profonde pour permettre un débattement radial de l'anneau élastique 44 vers un état expansé comme illustré à la figure 8.

La gorge de stockage 72 est délimitée axialement par une face radiale avant et par une face radiale arrière. La gorge de stockage 72 présente ainsi une largeur axiale suffisante pour recevoir l'anneau élastique avec un jeu axial "J1", comme représenté à la figure 10.

La gorge de stockage 72 est par exemple réalisée par usinage dans la bague intérieure 42.

Selon une variante non représentée, la face radiale arrière de la gorge de stockage est formée par une tôle rapportée sur la bague intérieure ou sur la bague extérieure du palier de roulement.

Dans ce mode de réalisation, le bord d'extrémité arrière de la portée 34 du premier arbre mené 24A comporte un chanfrein 78.

Lors de l'opération de montage du dispositif d'embrayage 20 sur la portée 34, la bague intérieure 42 est agencée coaxialement en arrière de la portée 34, comme illustré à la figure 8. L'anneau élastique 44 occupe alors sa position d'attente dans laquelle il est dans un état non contraint emprisonné dans la gorge de stockage 72.

Puis, comme illustré à la figure 9, la bague intérieure 42 est déplacée axialement vers l'avant de manière à entourer la portée 34. La portion annulaire intérieure de l'anneau élastique 44 entre alors en contact avec le chanfrein 78. L'anneau élastique 44 est alors en butée axial contre la face arrière de la gorge de stockage 72.

L'anneau élastique 44 est ainsi poussé par le palier de roulement 30 axialement vers l'avant. Le chanfrein 78 forme une rampe de guidage sur laquelle l'anneau élastique 44 glisse axialement vers l'avant de conserve avec la bague intérieure 42 en étant expansé élastiquement grâce au débattement permis par la profondeur de la gorge de stockage 72.

Ensuite, l'anneau élastique 44 est glissé vers l'avant sur la portée 34 jusqu'à la gorge de fixation 46 dans laquelle il est reçu dans sa position de fixation par rappel élastique de l'anneau élastique 44 vers son état non contraint. La gorge de stockage 72 est alors radialement en vis-à-vis de la gorge de fixation 46, et une portion annulaire extérieure de l'anneau élastique 44 est agencée dans la gorge de stockage 72, tandis qu'une portion annulaire intérieure est agencée dans la gorge de fixation 46. La bague intérieure 42 est alors en butée axiale vers l'avant contre l'anneau élastique 44.

Pour permettre le fonctionnement du dispositif d'embrayage 20, comme représenté à la figure 11, il est préférable de réserver un jeu axial de fonctionnement "J2" entre la bague extérieure 38 du palier de roulement 30 et la face d'épaulement 40 du premier arbre mené 24A. A cet effet, le jeu axial "J1" de l'anneau élastique 44 dans la gorge de stockage 72 est inférieur au jeu de fonctionnement "J2".

Lors du fonctionnement du dispositif d'embrayage 20, la bague intérieure 42 du palier de roulement 30 est ainsi susceptible de venir en butée axialement vers l'arrière contre l'anneau élastique 44 dans sa position de fixation par l'intermédiaire de la face avant de la gorge de stockage 72.

Selon une variante non représentée du cinquième mode de réalisation, l'anneau élastique comporte des pattes d'extrémité qui s'étendent axialement en saillie vers l'arrière par rapport à la bague intérieure du palier de roulement de manière à permettre le démontage du dispositif d'embrayage en écartant les pattes de manière à faire passer l'anneau élastique dans un état expansé.

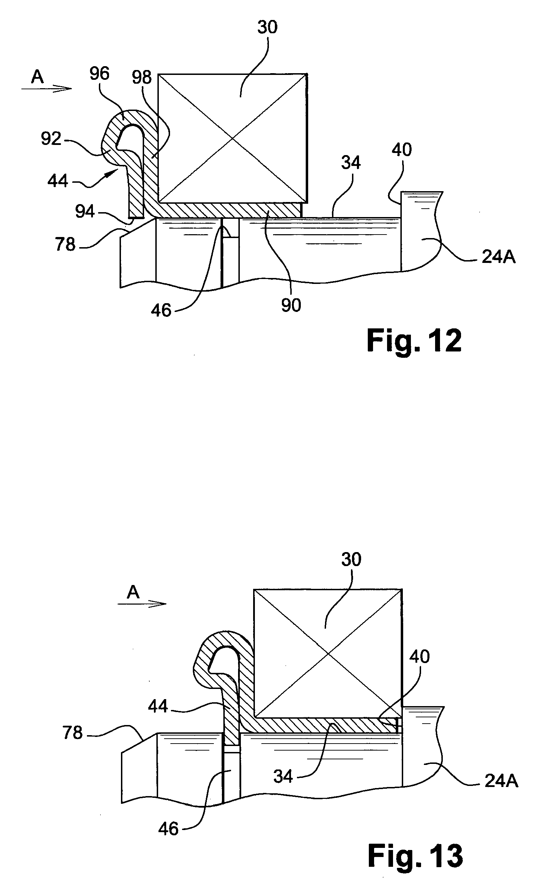

Un sixième mode de réalisation ne représentant pas l'invention est représenté aux figures 12 et 13. Comme pour le cinquième mode de réalisation, l'élément de blocage 44 est agencé de manière à permettre son passage automatique depuis sa position d'attente jusqu'à sa position de fixation lors de l'opération de montage par insertion du palier de roulement 30 sur la portée du premier arbre mené 24A. Ainsi, l'opération de fixation est réalisée automatiquement et simultanément lors de l'unique opération de montage.

Dans ce mode de réalisation, le dispositif d'embrayage 20 comporte un manchon 90 tubulaire cylindrique de révolution qui est coaxial à l'axe de rotation "B" et qui porte l'élément de blocage 44.

L'élément de blocage 44 est formé par au moins une patte radiale 92 de blocage qui comporte une extrémité intérieure libre 94. La patte radiale 92 est reliée par son extrémité extérieure 96 à une patte radiale de support 98. La patte radiale de support 98 est elle-même reliée de manière rigide par son extrémité inférieure à un bord d'extrémité arrière du manchon 90.

Le manchon 90 est emmanché axialement vers l'avant dans la bague intérieure 42 du palier de roulement 30 jusqu'à ce que la patte radiale de support 98 soit en appui axialement contre la bague intérieure 42 du palier de roulement 30. Le manchon 90 est de préférence emmanché à force de manière à être fixé au palier de roulement 30 avant le montage du dispositif d'embrayage 20 sur la portée 34.

Le tronçon d'extrémité extérieure 96 de la patte de blocage 92 est conformé de manière à former un ressort déformable élastiquement selon une direction radiale. La patte de blocage 92 est ainsi mobile entre un état de blocage dans lequel l'extrémité intérieure libre 94 de la patte de blocage 92 est en saillie radialement vers l'intérieur par rapport à la face cylindrique intérieure du manchon 90 et vers laquelle elle est rappelée élastiquement, et un état expansé dans lequel l'extrémité libre 94 de la patte de blocage 92 est susceptible d'être soulevée radialement vers l'extérieur au moins jusqu'à ce que l'extrémité libre 94 de la patte de blocage 92 affleure la face cylindrique intérieure du manchon 90.

Lors de l'opération de montage du dispositif d'embrayage 20 sur la portée 34 du premier arbre mené 24A, la bague intérieure 42 est agencée coaxialement en arrière de la portée 34. L'anneau élastique 44 occupe alors sa position d'attente dans laquelle il est dans un état non contraint.

Puis, la portée 34 est insérée à l'intérieur du manchon 90 par mouvement relatif du manchon 90 axialement vers l'avant de conserve avec le palier de roulement 30 de manière que le manchon 90 soit interposé radialement entre la bague intérieure 42 et la portée 34, comme représenté à la figure 12.

Lors du coulissement vers l'avant, l'extrémité libre 94 de la patte de blocage 92 glisse sur le chanfrein 78 d'extrémité avant qui forme une rampe de guidage de la patte de blocage 92 vers son état expansé.

Puis, l'extrémité libre 94 de la patte de blocage 92 est appuyée radialement vers l'intérieur contre la portée 34 par la force de rappel vers sa position de fixation. Lorsque l'extrémité libre 94 de la patte de blocage 92 atteint la gorge de fixation 46, elle est rappelée vers son état de blocage de manière que la patte de blocage 92 soit rappelée élastiquement vers son état de blocage en pénétrant radialement dans la gorge de fixation 46 pour occuper sa position de fixation, comme représenté à la figure 13.

Le dispositif d'embrayage 20 est ainsi monté et fixé sur la portée 34 du premier arbre mené 24A en une seule opération.

Les cinq premier modes de réalisation proposent ainsi un dispositif d'embrayage 20 équipé d'un anneau élastique 44 radialement déformable qui est fixé sur le dispositif d'embrayage 20 de manière à être dans sa position d'attente lorsque le dispositif d'embrayage 20 est monté sur le premier arbre mené 24A. Ainsi l'anneau élastique 44 ne risque pas d'être égaré lors du transport du dispositif d'embrayage 20 jusqu'à la chaîne de montage du véhicule automobile.

L'anneau élastique 44 est en outre agencé de manière à ce que l'opération de fixation puisse être réalisée avec une économie de mouvement et sans qu'une grande visibilité soit nécessaire à un opérateur.

Les deux derniers modes de réalisation proposent en plus que l'opération de fixation consistant à faire passer l'élément de blocage 44 depuis sa position d'attente jusqu'à sa position de fixation se fasse automatiquement lors de l'opération de montage du dispositif d'embrayage par insertion du palier de roulement 30 sur la portée 34 du premier arbre mené 24A.

## Revendications

1. Agencement pour la fixation d'un dispositif modulaire d'embrayage (20) à friction, notamment pour un véhicule automobile, sur un premier arbre mené (24A), qui comporte :
- un plateau de réaction (28) qui est monté à rotation autour du premier arbre mené (24A) par l'intermédiaire d'un palier de roulement (30), la bague intérieure (42) du palier de roulement (30) étant insérée par coulissement axial vers l'avant sur une portée (34) d'extrémité arrière du premier arbre mené (24A) lors d'une opération de montage ;
- au moins un premier disque coaxial avant de friction (50) qui est agencé axialement en avant du plateau de réaction (28) et qui est destiné à être serré contre une face avant du plateau de réaction (28) ;
- un élément de blocage (44) qui; lors d'une opération de fixation, est agencé par déformation élastique dans une position de fixation dans une gorge de fixation (46) associée de la portée (34) du premier arbre mené (24A) de manière à limiter le déplacement axial vers l'arrière du palier de roulement (30);
l'agencement étant tel que, préalablement à l'opération de fixation, l'élément de blocage (44) occupe une position d'attente dans laquelle il est porté par le dispositif d'embrayage (20),
l'agencement étant tel qu'il comporte des moyens (34, 70, 78, 82) pour guider les déplacements de l'anneau élastique (44) depuis sa position d'attente jusqu'à sa position de fixation.
L'agencement étant tel que l'élément de blocage (44) est un anneau élastique (44) radialement déformable qui est fixé sur le dispositif d'embrayage (20) de manière à être dans sa position d'attente lorsque le dispositif d'embrayage (20) est monté sur le premier arbre mené (24A), l'opération de fixation succédant à l'opération de montage,
ledit agencement étant **caractérisé en ce que** l'anneau élastique (44) est agencé dans un état expansé dans une gorge de stockage (72) qui est réalisée dans une face cylindrique extérieure d'un élément de l'agencement qui s'étend axialement vers l'arrière depuis la face arrière du plateau de réaction (28), et **en ce que** le bord d'extrémité arrière de ladite face cylindrique extérieure est agencé au droit de la gorge de fixation (46) de manière que l'anneau élastique (44) guide par ladite face cylindrique extérieure vers la gorge de fixation (46) lorsque l'anneau élastique (44) est déplacé axialement vers l'arrière.

## Claims

1. Arrangement for attaching a modular friction clutch (20), in particular for a motor vehicle, on a first driven shaft (24), which comprises:
- a reaction plate (28) which is rotatably mounted about the first driven shaft (24A) via a rolling bearing (30), the inner ring (42) of the rolling bearing (30) being inserted by forward axial sliding onto a rear end journal (34) of the first driven shaft (24A) during a mounting operation;
- at least one first front coaxial friction disk (50) which is disposed axially in front of the reaction plate (28) and which is intended to be clamped against a front face of the reaction plate (28);
- a blocking member (44) which, during an attachment operation, is placed by elastic deformation in an attachment position in an attachment groove (46) associated with the journal (34) of the first driven shaft (24A) in order to limit the rearward axial displacement of the rolling bearing (30);
the arrangement being such that, before the attachment operation, the blocking member (44) is in a rest position in which it is carried by the clutch device (20);
the arrangement being such that it comprises means (34, 70, 78, 82) for guiding the movements of the resilient ring (44) from its rest position to its attachment position.
the arrangement being such that the blocking member (44) is a radially deformable resilient ring (44) which is fixed on the clutch device (20) so as to be in its rest position when the clutch device (20) is mounted on the first driven shaft (24A), the attachment operation succeeding the mounting operation,
the said arrangement being **characterised in that** the resilient ring (44) is disposed in an expanded condition in a holding groove (72) which is formed in an outer cylindrical face of a member of the arrangement which extends axially rearward from the rear face of the reaction plate (28), and **in that** the rear end edge of the said outer cylindrical face is disposed opposite the attachment groove (46) in a manner such that the resilient ring (44) is guided by the said outer cylindrical face towards the attachment groove (46) when the resilient ring (44) is moved axially rearward.

## Patentansprüche

1. Anordnung zur Befestigung einer modularen Reibungskupplungsvorrichtung (20), insbesondere für ein Kraftfahrzeug, an einer ersten Abtriebswelle (24A), umfassend:
- eine Reaktionsplatte (28), die unter Vermittlung eines Wälzlagers (30) drehbar um die erste Abtriebswelle (24A) montiert ist, wobei der innere Ring (42) des Wälzlagers (30) bei einem Montagevorgang durch axiales Schieben nach vorne auf eine Auflagefläche (34) des hinteren Endes der ersten Abtriebswelle (24A) eingefügt ist;
- zumindest eine erste koaxiale Reibungsscheibe (50), die axial vor der Reaktionsplatte (28) angeordnet ist und die dazu bestimmt ist, gegen eine vordere Fläche der Reaktionsplatte (28) gespannt zu werden;
- ein Blockierungselement (44), welches bei einem Befestigungsvorgang durch elastische Verformung in eine Befestigungsposition in eine der Auflagefläche (34) der ersten Abtriebswelle (24A) zugeordnete Befestigungs-Hohlkehle (46) angeordnet ist, um die axiale Verschiebung des Wälzlagers (30) nach hinten zu begrenzen;
wobei die Anordnung derart ist, dass das Blockierungselement (44) vor dem Befestigungsvorgang eine Warteposition einnimmt, in der es von der Kupplungsvorrichtung (20) getragen wird,
wobei die Anordnung derart ist, dass sie Mittel (34, 70, 78, 82) zum Führen der Verlagerungen des elastischen Rings (44) von seiner Warteposition bis zu seiner Befestigungsposition aufweist,
wobei die Anordnung derart ist, dass das Blockierungselement (44) ein radial verformbarer elastischer Ring (44) ist, der an der Kupplungsvorrichtung (20) befestigt ist, um in seiner Warteposition zu sein, wenn die Kupplungsvorrichtung (20) an der ersten Abtriebswelle (24A) montiert wird, wobei der Befestigungsvorgang auf den Montagevorgang folgt,
wobei die besagte Anordnung **dadurch gekennzeichnet ist, dass** der elastische Ring (44) in einem expandierten Zustand in einer Lagerungs-Hohlkehle (72) angeordnet ist, die in einer zylindrischen äußeren Fläche eines Anordnungselements ausgeführt ist, welches sich von der hinteren Fläche der Reaktionsplatte (28) aus axial nach hinten erstreckt,
und dadurch, dass der Rand des hinteren Endes der besagten zylindrischen äußeren Fläche direkt über der Befestigungs-Hohlkehle (46) angeordnet ist, in der Art, dass der elastische Ring (44) durch die besagte zylindrischen äußeren Fläche in Richtung zu der Befestigungs-Hohlkehle (46) geführt wird, wenn der elastische Ring (44) axial nach hinten verlagert wird.
